# EUROPEAN PATENT APPLICATION

(11) **EP 2 398 244 A2**
(43) Date of publication of application: **21.12.2011**
(21) Application number: 11155110.7
(22) Date of filing: 18.02.2011
(51) Int. Cl.: H04N 13/00

(54) **Image processing apparatus and control method of the same**

(30) Priority: 15.06.2010 KR 20100056404
(71) Applicant: SAMSUNG ELECTRONICS CO., LTD., Suwon-si Gyeonggi-do 442-742 (KR)
(72) Inventor: Kang, Sung-rae, Seoul (KR); Lee, Jong-whan, Gyeonggi-do (KR)
(74) Representative: Fearnside, Andrew Simon

(57) **Abstract**

Disclosed herein are an image processing apparatus and a control method thereof. The image processing apparatus includes a receiver (10) which receives a three-dimensional (3D) video signal; a video signal processor (20) which scales the received 3D video signal; and a controller (70) which controls the video signal processor to scale the 3D video signal to have adjusted depth if the 3D video signal is received through the receiver. Thus, there are provided an image processing apparatus and a control method of the same, which can adjust a cubic effect of depth of a 3D video signal through the existing scaler without a separate image reconstructing device for adjusting the cubic effect or depth of the 3D video signal.

## Description

### BACKGROUND

### Field

Apparatuses and methods consistent with the exemplary embodiments relate to an image processing apparatus and a control method of the same, and more particularly, to an image processing apparatus capable of processing a three-dimensional video signal and a control method of the same, in which the depth of the three-dimensional video signal is adjusted through scaling.

### Description of the Related Art

A display apparatus can display a two-dimensional (2D) image and a three-dimensional (3D) image according to its characteristics. A user's two eyes respectively view an object from different angles, and as a result, perceive the object in three dimensions. With this principle, the 3D image may be divided into a left-eye image and a right-eye image with regard to one scene, according to the respective points of view. In other words, even though the respective points of view are spaced apart from each other in a horizontal direction, a human may regard the two points of view as one due to binocular disparity, and may thereby recognize an object in three dimensions.

When the two left and right-eye images different in the point of view are seen as being overlapped, a difference in a horizontal position between the left and right-eye images increases as an object becomes nearer, such that a human perceives the resulting effects (e.g., cubic effect or depth).

Therefore, the display apparatus capable of displaying a stereoscopic image generally includes an image reconstructing device for reconstructing the difference in the position between the left and right-eye images. Nevertheless, it is difficult for the image reconstructing device to produce 3D-related effects, as such capability requires a relatively high degree of complexity.

### SUMMARY

An aspect of the present invention provides an image processing apparatus which may include: a receiver which operable to receive a video signal which includes a three-dimensional (3D) video signal and stereoscopic information; a video signal processor operable to scale the received 3D video signal, wherein the scaling includes adjusting the received 3D video signal to correspond to a supported resolution and changing the stereoscopic information; and a controller which controls the receiver to receive the 3D video signal and controls the video signal processor to scale the 3D video signal if the 3D video signal is received through the receiver.

The image processing apparatus may further include a user input unit which receives a selection from a user for adjusting the received 3D video signal, wherein the controller controls the video signal processor to scale the received 3D video signal based on the selection input by the user through the user input unit.

The image processing apparatus may further include: a display unit; and a user interface (UI) generator operable to generate a UI, wherein the controller controls the UI generator to generate a UI including a plurality of options for adjusting a depth of the received 3D video signal.

If one of the plurality of options for adjusting the depth is selected, the controller may control the video signal processor to scale the received 3D video signal based on the selected option.

The image processing apparatus may further include a storage unit to store one of enlargement and reduction ratios corresponding to the plurality of options for adjusting the depth of the 3D video signal.

The video signal processor may include a stereoscopic information extractor to extract the stereoscopic information from the received video signal, and a scale ratio generator to generate a first ratio, which includes one of an enlargement and a reduction ratio for the received 3D video signal, based on the extracted stereoscopic information.

The stereoscopic information may include information about a difference in position between left and right-eye video signals in a first area of an image included in the 3D video signal.

The controller may determine a second area of the image included in the 3D video signal, wherein the second area has a maximum difference in position between at least one object in the left and right-eye video signals, based on the information about the difference in position between the at least one object in the left and right-eye video signals, and wherein the controller controls the scale ratio generator to generate a second ratio, which includes one of an enlargement and a reduction ratio, based on the determined second area.

At least a portion of the stereoscopic information may correspond to the determined second area, and the controller may control the video signal processor to change the portion of the stereoscopic information corresponding to the determined second area based on the generated second ratio.

The image processing apparatus may further include a user input unit for a user to input a selection to adjust a depth of the received 3D video signal, wherein at least a portion of the stereoscopic information corresponds to the determined second area, and wherein the controller controls the video signal processor to change the portion of the stereoscopic information corresponding to the determined second area based on the generated second ratio and the selection received through the user input unit.

Another aspect of the present invention provides a method of controlling an image processing apparatus, wherein the method may include: receiving a three-dimensional (3D) video signal including stereoscopic information; and scaling the received 3D video signal, wherein the scaling includes adjusting the received 3D video signal to correspond to a supported resolution and changing the stereoscopic information.

The method may further include receiving a user's selection for adjusting a depth of the received 3D video signal, wherein the scaling is performed according to the received user's selection.

The method may further include displaying a user interface (UI) including a plurality of options for adjusting a depth of the 3D video signal.

If one of the plurality of options is selected, the changing of the stereoscopic information may be performed according to the selected one of the plurality of options.

The method may further include storing one of enlargement and reduction ratios for the 3D video signal corresponding to the plurality of options for adjusting the depth of the 3D video signal.

The method may further include generating a first ratio, which includes one of an enlargement and a reduction ratio for the received 3D video signal, based on the stereoscopic information.

The stereoscopic information may include information about a difference in position between left and right-eye video signals in a first area of an image included in the 3D video signal, and wherein the generating of the first ratio is based on the information about the difference in position.

The method may further include: determining a second area, which has a maximum difference in position between at least one object in the left and right-eye video signals, based on the information about the difference in position; and generating a second ratio, which includes one of an enlargement and a reduction ratio, based on the determined second area.

At least a portion of the stereoscopic information may correspond to the determined second area, and wherein the changing of the stereoscopic information comprises changing the portion of stereoscopic information corresponding to the determined second area based on the generated second ratio.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 is a control block diagram of an image processing apparatus according to an exemplary embodiment;
FIG. 2 shows an example that an image processing apparatus according to a first exemplary embodiment adjusts depth of a 3D video signal;
FIG. 3 shows an example that an image processing apparatus according to a second exemplary embodiment adjusts depth of a 3D video signal;
FIG. 4 shows an example of a user interface (UI) where a depth adjusting procedure of the image processing apparatus according to the first and second exemplary embodiments is displayed;
FIGs. 5 and 6 are flowcharts of a control operation for adjusting the depth of the 3D video signal in the image processing apparatus according to the first exemplary embodiment; and
FIGs. 7 and 8 are flowcharts of a control operation for adjusting the depth of the 3D video signal in the image processing apparatus according to the second exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

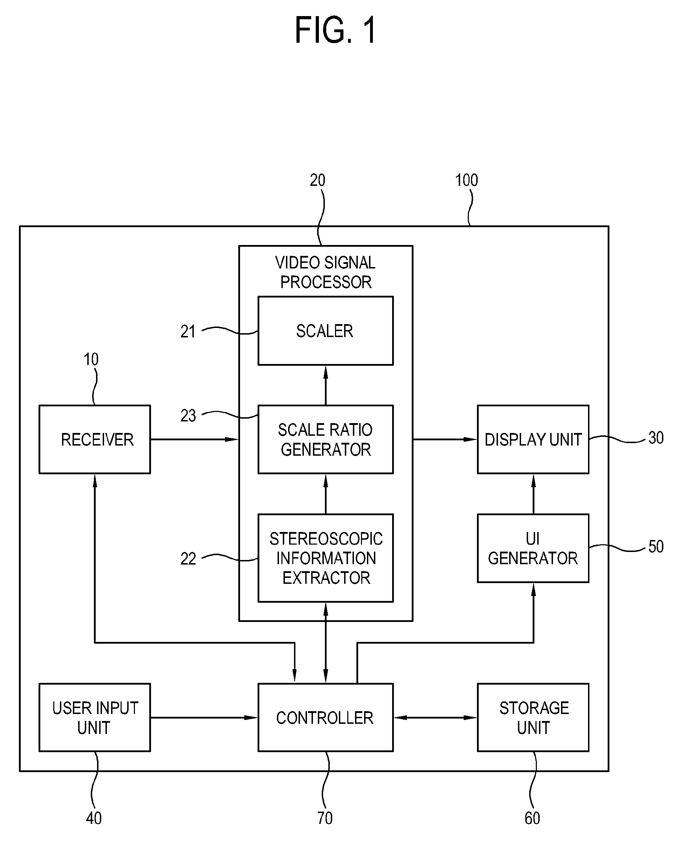

FIG. 1 is a control block diagram of an image processing apparatus 100 according to an exemplary embodiment.

The image processing apparatus 100 in this exemplary embodiment may include an electronic device capable of receiving and processing a video signal from an external video source (not shown). The image processing apparatus 100 may be achieved by a display apparatus which displays an image based on the processed video signal on a display unit 30.

If the image processing apparatus 100 is achieved by the display apparatus, the image processing apparatus 100 may receive a video signal from various video sources such as a computer (not shown) that can generate a video signal with a central processing unit (CPU, not shown) and a graphic card (not shown) and provide it locally; a server (not shown) that can provide a video signal to a network; a broadcasting device (not shown) of a broadcasting station that can broadcast a broadcasting signal through airwaves or a cable; etc.

The image processing apparatus 100 receives a two-dimensional (2D) video signal or a three-dimensional (3D) video signal, and processes it to be displayed as a 2D image or a 3D image. As opposed to the 2D image, the 3D image is divided into a left-eye image for a user's left eye, and a right-eye image for a user's right eye. Thus, if the image processing apparatus 100 receives a 3D video signal, the left-eye image and the right-eye image are alternately displayed per frame on the basis of the 3D video signal. The image processing apparatus 100 may further include shutter glasses (not shown) for alternately opening and closing a left shutter and a right shutter in accordance with the frame of the left-eye image and the right-eye image alternately displayed. The shutter glasses (not shown) selectively open and close a user's view of left and right eyes according to which of the left-eye image and the right-eye image is currently displayed if the 3D image is displayed by the image processing apparatus 100.

Also, the image processing apparatus 100 in this exemplary embodiment may be achieved by a set-top box excluding the display unit 30. Thus, the set-top box processes a video signal supplied from an external video source (not shown) and transmits the processed video signal to other display apparatuses such as a television (TV), etc.

As shown in FIG. 1, the image processing apparatus 100 in this exemplary embodiment includes a receiver 10, a video signal processor 20, a display unit 30, a user input unit 40, a user interface (UI) generator 50, a storage unit 60, and a controller 70 controlling them.

The receiver 10 receives a video signal from an exterior and transmits it to the video signal processor 20, which can be achieved in various forms in accordance with formats of a received video signal and realization of the image processing apparatus 100. The video signal may include a 2D video signal or a 3D video signal, an audio signal, and a data signal.

If the video signal is a 3D video signal, the data signal may contain stereoscopic information about the 3D video signal.

The stereoscopic information may contain information about a difference in a horizontal position between a left-eye image and a right-eye image in a predetermined area of an image corresponding to the 3D video signal.

For example, if the image processing apparatus 100 is achieved by the TV, the receiver 10 may wirelessly receive a radio frequency (RF) signal transmitted from a broadcasting receiver, or may receive a video signal based on composite video, component video, super video, SCART, high definition multimedia interface (HDMI), etc. At The receiver 10 may further include an antenna (not shown) and/or a tuner (not shown) to be tuned to a broadcasting channel.

For example, if the image processing apparatus 100 is achieved by a monitor for a personal computer (PC), the receiver 10 may be achieved by D-SUB capable of transmitting an RGB signal based on VGA standards, digital video interactive (DVI)-analog (A), DVI-integrated digital/analog (I), DVI-digital (D) based on DVI standards, HDMI standards, etc. Also, the receiver 10 may be achieved by a DisplayPort, a unified display interface (UDI), or a wireless HD, etc.

The video signal processor 20 can apply scaling to the 2D or 3D video signal received through the receiver 10.

The video signal processor 20 further includes a scaler 21, a stereoscopic information extractor 22 and a scale ratio generator 23.

The scaler 21 may generally scale a video signal received through the receiver 10 so that the video signal can be most properly displayed on the display unit 30 to be described later. That is, the scaler 21 may scale the received video signal to correspond to resolutions supported by the display unit 30.

Also, the scaler 21 can not only scale the received video signal in order to display it by a predetermined resolution, but also scale the received 3D video signal so as to adjust a cubic effect or depth of the 3D video signal. Further, the scaler 21 can scale the 3D video signal in order to adjust the cubic effect or depth of the 3D video signal in accordance with user's selection. This will be described below in more detail.

The stereoscopic information extractor 22 can extract stereoscopic information from a 3D video signal when receiving the 3D video signal with the stereoscopic information through the receiver 10. Here, the stereoscopic information may include information about a difference in a horizontal position between the left-eye image and the right-eye image in a predetermined area of an image corresponding to the 3D video signal. Also, the stereoscopic information may further include information about the depth of the image corresponding to the 3D video signal.

The scale ratio generator 23 may generate an enlargement or reduction ratio for a 3D video signal received through the receiver 10 on the basis of the stereoscopic information extracted by the stereoscopic information extractor 22.

The scale ratio generator 23 may generate the enlargement or reduction ratio for enlarging or reducing the whole image corresponding to the received 3D video signal, or may generate the enlargement or reduction ratio for enlarging or reducing only a predetermined area of the image corresponding to the received 3D video signal.

The video signal processor 20 may further perform various video processes previously set for a video signal. However, there is no limit to the kind of processes. For example, the process may include decoding and encoding corresponding various video formats, de-interlacing, frame refresh rate conversion, noise reduction for enhancing picture quality, detail enhancement, line scanning, etc. The processes may be individually performed, or combination of the processes may be performed.

The image processing apparatus 100 in this exemplary embodiment may further include an audio signal processor (not shown) capable of processing an audio signal received together with the video signal through the receiver 10. Thus, the audio signal processor (not shown) performs various audio processes previously set for an audio signal. However, there is no limit to the kind of processes. For example, the process may include analog-to-digital conversion for an audio signal, amplification of an audio signal, an output level control for an audio signal, frequency compensation for an audio signal, etc. The processes may be individually performed, or combination of the processes may be performed. Therefore, the image processing apparatus 100 may further include a speaker (not shown) for outputting sound corresponding to an audio signal processed by the audio signal processor.

The display unit 30 displays an image corresponding to a video signal processed by the video signal processor 20. The display unit 30 can display a video frame by vertically arraying a plurality of horizontal scan lines scanned from the video signal processor 20. The display unit 30 may include a display panel (not shown) for displaying the image, and the display panel (not shown) may include a liquid crystal panel with a liquid crystal layer, an organic light emitting panel with an organic light emitting layer, a plasma display panel, etc.

The user input unit 40 allows a user to input his/her selection. Through the user input unit 40, a user may input his/her selection for adjusting the 3D video signal received in the receiver 10 to have predetermined depth.

The user input unit 40 may include a predetermined character input part (not shown), a predetermined numeral input part (not shown), channel up/down keys (not shown), a volume control keys (not shown), etc. If there is input of a certain key provided in the user input unit 40, it is possible to enter a menu for adjusting the depth of the 3D video signal received in the receiver 10.

The user input unit 40 may be provided in the form of a button on the display unit 30, a touch panel on the display panel (not shown) of the display unit 30, a wired/wireless keyboard, or a remote controller. However, the user input unit can have any form as long as it can allow a user to input his/her selection.

The UI generator 50 can generate UI information. Under control of the controller 70 to be described later, the UI generator 50 generates UI information showing a plurality of steps for adjusting the depth of the 3D video signal received through the receiver 10, and displays it on the display unit 30.

The storage unit 60 stores the enlargement or reduction ratios for the received 3D video signal corresponding to the plurality of steps for adjusting the depth of the 3D video signal received through the receiver 10.

The controller 70 may control the video signal processor 20 to scale the 3D video signal so that the received 3D video signal can have predetermined depth if the 3D video signal is received through the receiver 10. Further, the controller 70 may select a depth step optimal to a user's view among the plurality of options for adjusting the option if receiving the 3D video signal, and control the scaler 21 of the video signal processor 20 to scale the received 3D video signal on the basis of the enlargement/reduction ratio corresponding to the selected depth option stored in the storage unit 60.

Also, the controller 70 may control the video signal processor 20 to scale the received 3D video signal to have predetermined depth selected by a user if a user's selection for adjusting the 3D video signal received in the receiver 10 to have predetermined depth is received through the user input unit 40. That is, the controller 70 may control the scaler 21 of the video signal processor 20 to scale the received 3D video signal to have the selected depth on the basis of the enlargement/reduction ratio corresponding to the selected depth stored in the storage unit 60.

The controller 70 controls the stereoscopic information extractor 22 of the video signal processor 20 to extract the stereoscopic information from the 3D video signal received in the receiver 10. Also, the controller 70 may control the scale ratio generator 23 of the video signal processor 20 to generate the enlargement or reduction ratio for enlarging or reducing only a predetermined area of an image corresponding to the received 3D video signal on the basis of the extracted stereoscopic information.

Thus, the controller 70 may control the scaler 21 to enlarge or reduce only a predetermined area of an image corresponding to the received 3D video signal on the basis of the enlargement or reduction ratio generated by the scale ratio generator 23, if receiving the 3D video signal through the receiver 10.

Also, the controller 70 may control the scaler 21 to enlarge or reduce only a predetermined area of an image corresponding to the received 3D video signal on the basis of the enlargement or reduction ratio generated by the scale ratio generator 23, if a user's selection for adjusting the depth of the 3D video signal received in the receiver 10 is received through the user input unit 40.

The control of the controller 70 will be described below in more detail.

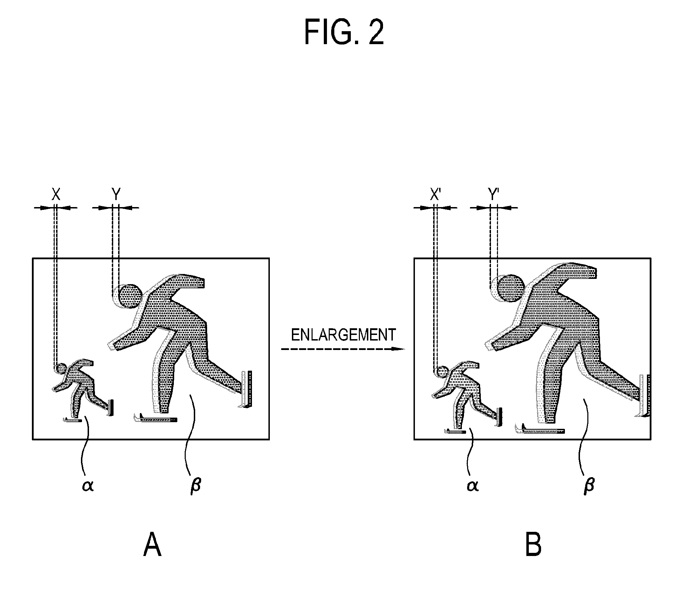

FIG. 2 shows an example that an image processing apparatus according to a first exemplary embodiment adjusts depth of a 3D video signal.

As shown in (A) of FIG. 2, a difference (X, Y) in a horizontal position between the left-eye image and the right-eye image occurs when the two left and right-eye images different in a point of view with respect to one object are seen as being overlapped. Perspective becomes significant as the position difference between the left and right-eye images increases. Therefore, it is shown as if an object β having a great position difference Y is nearer than an object α having a small position difference X. Accordingly, the image processing apparatus in this exemplary embodiment enlarges the received 3D video signal so that the position difference Y can increase, thereby maximizing a 3D cubic effect.

If a 3D video signal is received in the receiver 10 of the video processing apparatus 100 according to the first exemplary embodiment, the scaler 21 of the video signal processor 20 scales the received 3D video signal through a typical scaling process to be properly displayed on the display unit 30 or to have a resolution proper for the display unit 30.

Then, the controller 70 selects the most optimum depth option among the depth options stored in the storage unit 60 in order to adjust the depth of the 3D video signal, and controls the scaler 21 to scale the 3D video signal to have predetermined depth on the basis of the enlargement/reduction ratio corresponding to the selected depth option stored in the storage unit 60.

If receiving a user's selection for adjusting the cubic effect (or depth) of the displayed 3D image through the user input unit 40 while the display unit 30 displays a 3D image based on the 3D video signal scaled to be properly displayed, the controller 70 controls the scaler 21 to scale the 3D video signal on the basis of the enlargement/reduction ratio corresponding to the depth option selected by a user among the depth options stored in the storage unit 60.

Referring to (A) of FIG. 2, as an example of an image corresponding to the 3D video signal received through the receiver 10, it looks as if the object α having the position difference X between the left and right-eye video signals among objects included in the image is farther back than the object β having the position difference Y between the left and right-eye video signals. In other words, it looks as if the object having the position difference Y is further front than the object α having the position difference X.

For example, let the space X be 1 and the space Y be 2.

If the scaler 21 enlarges the received 3D video signal twice under the control of the controller 70, the position difference X' of the object α becomes 2 and the position difference Y' of the object β becomes 4 as shown in (B) of FIG. 2. Due to the enlargement by the scaler 21, the enlarged position difference Y' of the object β becomes noticeably greater as compared with the enlarged position difference X' of the object α, and thus a user can more vividly feel the cubic effect.

Accordingly, the image processing apparatus in this exemplary embodiment can simply achieve the adjustment of the cubic effect or depth of the 3D video signal by enlarging or reducing the 3D video signal through the scaler 21.

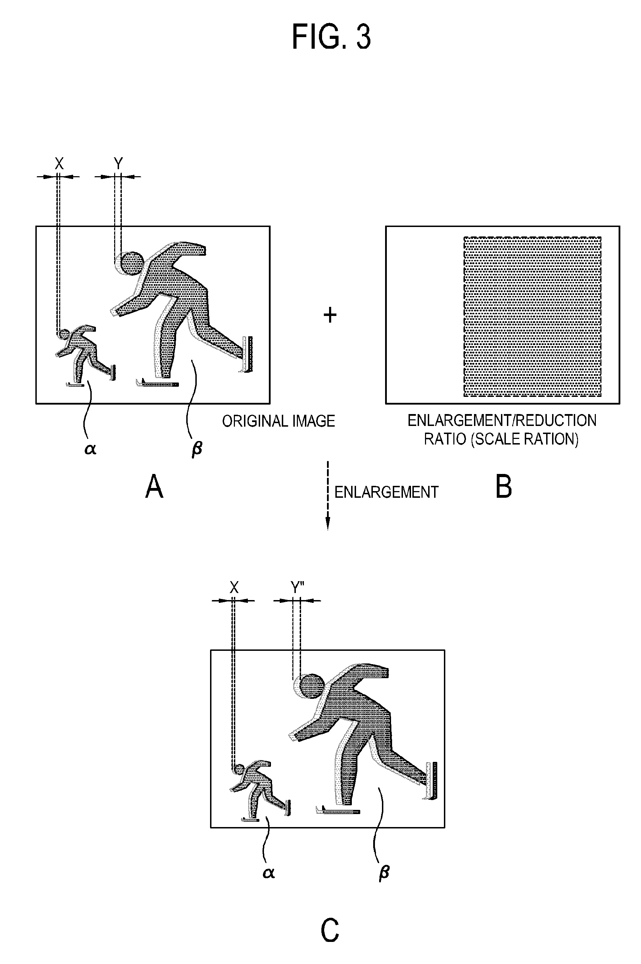

FIG. 3 shows an example that an image processing apparatus according to a second exemplary embodiment adjusts depth of a 3D video signal.

If a 3D video signal with stereoscopic information is received through the receiver 10 of the image processing apparatus 100 according to the second exemplary embodiment of the present invention, the scaler 21 of the video signal processor 20 scales the received 3D video signal to be properly displayed on the display unit 30.

The controller 70 selects the most optimum depth option among the depth options stored in the storage unit 60 in order to adjust the depth of the 3D video signal. The controller 70 controls the stereoscopic information extractor 22 to extract the stereoscopic information

Also, while the 3D image corresponding to the 3D video signal scaled to be properly displayed is displayed on the display unit 30, if a user's selection for adjusting the cubic effect (or depth) of the displayed 3D image is input through the user input unit 40, the controller 70 controls the stereoscopic information extractor 22 to extract the stereoscopic information from the received 3D video signal.

The stereoscopic information may contain information about a difference in a horizontal position between the left-eye image and the right-eye image in a predetermined area of an image corresponding to the received 3D video signal.

The controller 70 determines an object having the most (i.e., the maximum) difference in the position of at least one object between the left and right-eye images. The determining may be accomplished by comparing the position difference information of the left and right-eye images, with regard to the at least one object included in the image corresponding to the received 3D video signal, on the basis of the position difference information extracted from the stereoscopic information extractor 22

Referring to (A) of FIG. 3, it looks as if the object β having the position difference Y between the left and right-eye images is further front than an object α having a position difference X between the left and right-eye images. For example, let the space X be 1 and the space Y be 2. Thus, the controller 70 selects the object β having the large position difference Y (refer to (B) of FIG. 3).

The controller 70 may control the scale ratio generator 23 to generate the enlargement or reduction ratio for enlarging or reducing only the determined object while considering the enlargement or reduction ratios stored in the storage unit 60 in accordance with the optimum depth option selected among the depth options stored in the storage unit 60 or in accordance with the option for adjusting the depth corresponding to a user's selection input through the user input unit 40. For example, the controller 70 may control the scale ratio generator 23 to generate a twice enlargement ratio for the determined object β. The controller 70 controls the scaler 21 to enlarge only the object β on the basis of the generate enlargement ratio. Thus, the object β has a space Y" of 4 more enlarged twice than its original. On the other hand, the object α not determined by the controller 70 has its original space X of 1 as it is. In this case, a user more vividly feels a difference in depth between the object α and the object β.

Thus, the image processing apparatus in this exemplary embodiment enlarges/reduces only the object determined by the controller 70 for the enlargement/reduction, so that the depth of the 3D video signal can be more deeply adjusted.

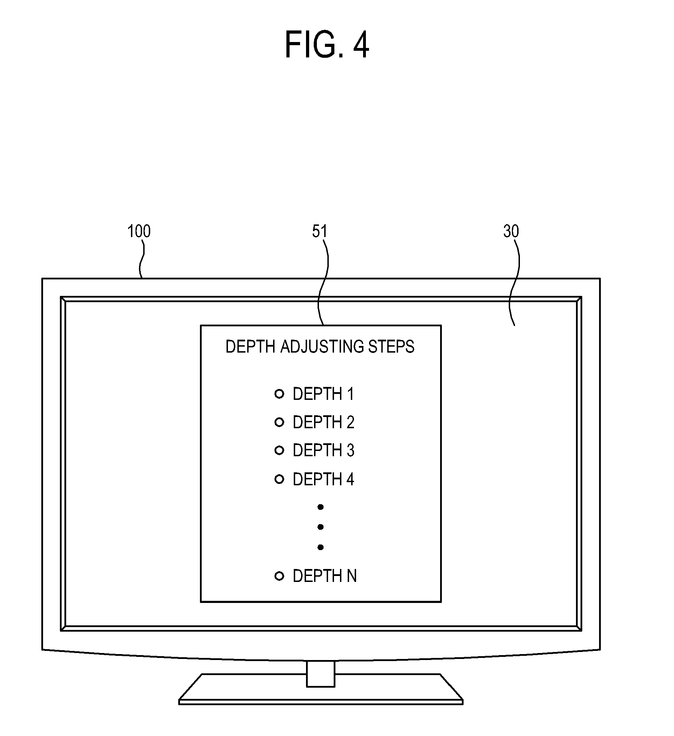

FIG. 4 shows an example of a user interface (UI) where a depth adjusting procedure of the image processing apparatus according to the first and second exemplary embodiments is displayed.

While the 3D image corresponding to the 3D video signal scaled to be properly displayed is displayed on the display unit 30, if a certain key for adjusting the cubic effect (or depth) of the displayed 3D image is input through the user input unit 40, the controller 70 controls the UI generator 50 to generate a UI 51 showing a plurality of options for adjusting the depth of the 3D image, thereby displaying the UI 51 on the display unit 30.

As shown in FIG. 4, in the UI 51 displayed on the display unit 30, the options for adjusting the depth includes the first depth option to the Nth depth option.

If one of the depth options shown in the UI 51 is selected through the user input unit 40, the controller 70 controls the scaler 21 to scale the 3D video signal on the basis of the previously stored enlargement/reduction ratio in accordance with the selected depth option, so that an image corresponding to the scaled 3D video signal can be displayed on the display unit 30.

According to another exemplary embodiment, if a user inputs a certain key for adjusting the cubic effect (or depth) of the displayed 3D image through the user input unit 40, the controller 70 enables a user to adjust the depth of the 3D video signal by using a volume control key (not shown) provided in the user input unit 40.

That is, if there is a certain key input for adjusting the depth, the controller 70 controls the UI generator 50 to generate a UI such as the volume control in a lower side of the display unit 30 displaying the 3D image.

If a user selects a "+" key through the volume control key (not shown) provided in the user input unit 40, the controller 70 controls the scaler 21 to enlarge a currently displayed 3D image, thereby directly displaying the scaled 3D image on the display unit 30. A user may input the "+" key until the 3D image having desired depth is displayed on the display unit 30.

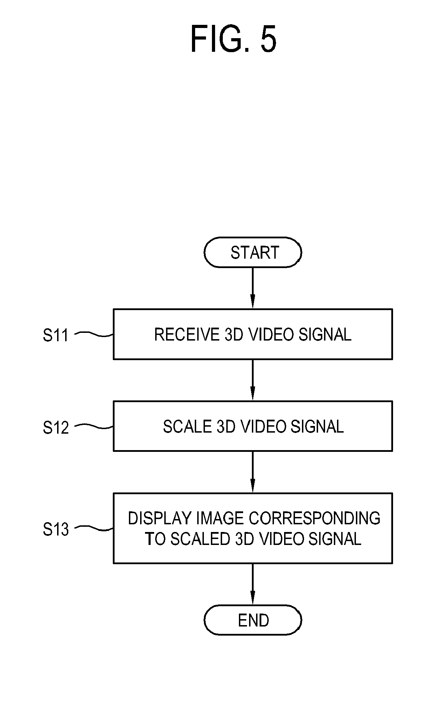

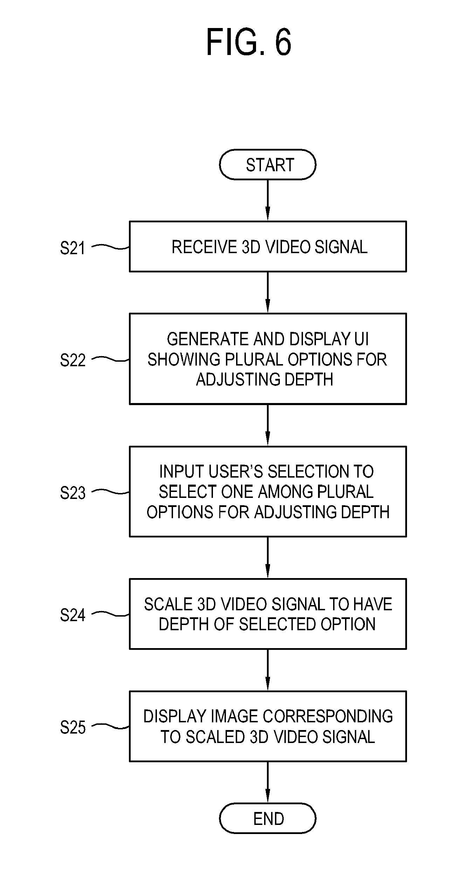

FIGs. 5 and 6 are flowcharts of a control operation for adjusting the depth of the 3D video signal in the image processing apparatus according to the first exemplary embodiment.

As shown in FIG. 5, if the receiver 10 of the image processing apparatus 100 receives a 3D video signal (S11), the controller 70 selects the optimum depth option among the plurality of depth options for adjusting the 3D video signal to have the optimum depth, and controls the scaler 21 to scale the 3D video signal by applying the enlargement/reduction ratio stored in the storage unit 60 in accordance with the selected depth option (S12). An image corresponding to the scaled 3D video signal is displayed on the display unit 30 (S13).

According to another exemplary embodiment, as shown in FIG. 6, if the receiver 10 of the image processing apparatus 100 receives a 3D video signal (S21), the scaler 21 of the video signal processor 20 scales the received 3D video signal to be properly displayed on the display unit 30. While the 3D image corresponding to the 3D video signal scaled to be properly displayed is displayed on the display unit 30, if a certain key for adjusting the cubic effect (or depth) of the displayed 3D image is input through the user input unit 40, the controller 70 controls the UI generator 50 to generate a UI 51 showing a plurality of options for adjusting the depth, thereby displaying the UI 51 on the display unit 30 (S22). If a user's selection is input for selecting one of the plural options for adjusting the dept with reference to the displayed UI showing the plural options (S23), the controller 70 controls the scaler 21 to scale the 3D video signal on the basis of the enlargement/reduction ratio corresponding to the depth option stored in the storage unit 60 and selected by the user (S24). Then, an image corresponding to the video signal scaled to the 3D video signal having depth desired by a user is displayed on the display unit 30 (S25).

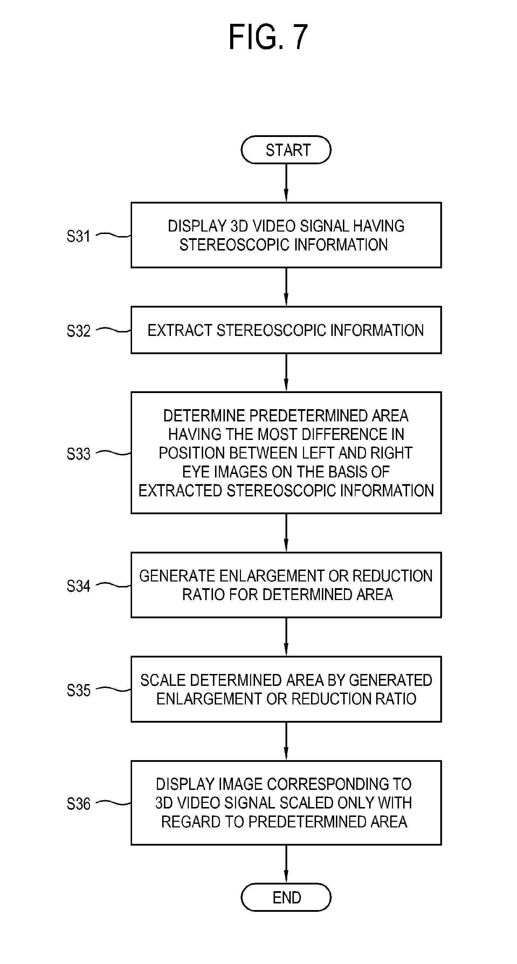

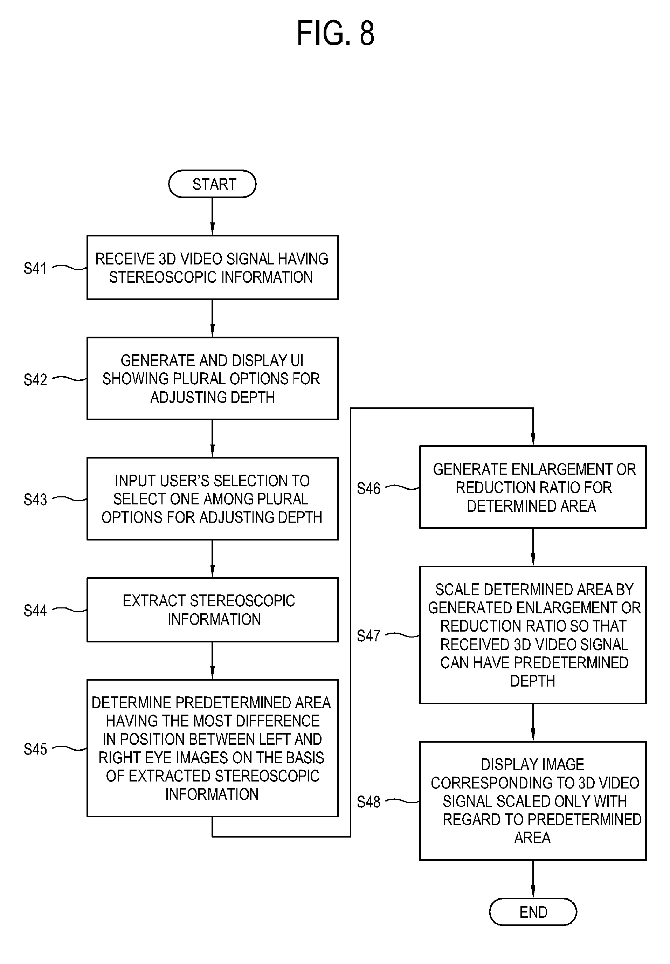

FIGs. 7 and 8 are flowcharts of a control operation for adjusting the depth of the 3D video signal in the image processing apparatus according to the second exemplary embodiment.

As shown in FIG. 7, if the receiver 10 of the image processing apparatus 100 receives a 3D video signal (S31), the controller 70 selects the optimum depth option among the plurality of depth options for adjusting the 3D video signal to have the optimum depth. The controller controls the stereoscopic information extractor 22 to extract the stereoscopic information from the 3D video signal (S32). The controller 70 determines a predetermined area having the most difference in a position between the left and right-eye images on the basis of the extracted stereoscopic information (S33). The controller 70 controls the scale ratio generator 23 to generate the enlargement or reduction ratio for enlarging or reducing the determined predetermined area (S34). The enlargement or reduction ratio generated by the scale ratio generator 23 may be generated with reference to the enlargement or reduction ratios previously stored in the storage unit 60 in accordance with the selected option for adjusting the depth. The controller 70 controls the scaler 21 to enlarge or reduce only the determined area to have the generated enlargement or reduction ratio (S35). Then, an image corresponding to the 3D video signal of which only the predetermined area is scaled is displayed on the display unit 30 (S36).

According to still another exemplary embodiment, as shown in FIG. 8, if the receiver 10 of the image processing apparatus 100 receives a 3D video signal having stereoscopic information (S41), the scaler 21 of the video signal processor 20 scales the received 3D video signal to be properly displayed on the display unit 30. While the 3D image corresponding to the 3D video signal scaled to be properly displayed is displayed on the display unit 30, if a certain key for adjusting the cubic effect (or depth) of the displayed 3D image is input through the user input unit 40, the controller 70 controls the UI generator 50 to generate a UI showing a plurality of options for adjusting the depth, thereby displaying the UI on the display unit 30 (S42). If a user's selection is input for selecting one of the plural options for adjusting the dept with reference to the displayed UI showing the plural options (S43), the controller 70 controls the stereoscopic information extractor 22 to extract the stereoscopic information from the 3D video signal (S44). The controller 70 determines an area having the most difference in a position between the left and right-eye images on the basis of the extracted stereoscopic information (S45). The controller 70 controls the scale ratio generator 23 to generate the enlargement or reduction ratio for enlarging or reducing the determined area (S46). The enlargement or reduction ratio generated by the scale ratio generator 23 may be generated with reference to the enlargement or reduction ratios previously stored in the storage unit 60 in accordance with the option selected by a user for adjusting the depth.

The controller 70 controls the scaler 21 to enlarge or reduce only the determined area to have the generated enlargement or reduction ratio (S47). Then, an image corresponding to the 3D video signal of which only the predetermined area is scaled is displayed on the display unit 30(S48).

As described above, according to an exemplary embodiment, there are provided an image processing apparatus and a control method of the same, which can adjust a cubic effect of depth of a 3D video signal through the existing scaler without a separate image reconstructing device for adjusting the cubic effect or depth of the 3D video signal.

Although a few exemplary embodiments have been shown and described, it will be appreciated by those skilled in the art that changes may be made in these exemplary embodiments without departing from the scope of the invention as defined by the claims.

## Claims

1. An image processing apparatus comprising:
a receiver (10) which operable to receive a video signal which includes a three-dimensional (3D) video signal and stereoscopic information;
a video signal processor (20) operable to scale the received 3D video signal, wherein the scaling includes adjusting the received 3D video signal to correspond to a supported resolution and changing the stereoscopic information; and
a controller (70) which is arranged to control the receiver to receive the 3D video signal and to control the video signal processor to scale the 3D video signal if the 3D video signal is received through the receiver.

2. The image processing apparatus according to claim 1, further comprising a user input unit (40) which receives a selection from a user for adjusting the received 3D video signal,
wherein the controller is arranged to control the video signal processor to scale the received 3D video signal based on the selection input by the user through the user input unit.

3. The image processing apparatus according to any preceding claim, further comprising
a display unit (30); and
a user interface (UI) generator (50) operable to generate a UI,
wherein the controller is arranged to control the UI generator to generate a UI including a plurality of options for adjusting a depth of the received 3D video signal.

4. The image processing apparatus according to claim 3, wherein if one of the plurality of options for adjusting the depth is selected, the controller is arranged to control the video signal processor to scale the received 3D video signal based on the selected option.

5. The image processing apparatus according to claim 4, further comprising a storage unit (60) to store one of enlargement and reduction ratios corresponding to the plurality of options for adjusting the depth of the 3D video signal.

6. The image processing apparatus according to any preceding claim, wherein the video signal processor comprises a stereoscopic information extractor (22) to extract the stereoscopic information from the received video signal, and a scale ratio generator (23) to generate a first ratio, which includes one of an enlargement and a reduction ratio for the received 3D video signal, based on the extracted stereoscopic information.

7. The image processing apparatus according to claim 6,
wherein the stereoscopic information comprises information about a difference in position between left and right-eye video signals in a first area of an image included in the 3D video signal.

8. The image processing apparatus according to claim 7, wherein the controller is arranged to determine a second area of the image included in the 3D video signal, wherein the second area has a maximum difference in position between at least one object in the left and right-eye video signals, based on the information about the difference in position between the at least one object in the left and right-eye video signals, and
wherein the controller is arranged to control the scale ratio generator to generate a second ratio, which includes one of an enlargement and a reduction ratio, based on the determined second area.

9. The image processing apparatus according to claim 8, wherein at least a portion of the stereoscopic information corresponds to the determined second area, and
wherein the controller is arranged to control the video signal processor to change the portion of the stereoscopic information corresponding to the determined second area based on the generated second ratio.

10. The image processing apparatus according to claim 8, further comprising a user input unit for a user to input a selection to adjust a depth of the received 3D video signal,
wherein at least a portion of the stereoscopic information corresponds to the determined second area, and
wherein the controller is arranged to control the video signal processor to change the portion of the stereoscopic information corresponding to the determined second area based on the generated second ratio and the selection received through the user input unit.

11. A method of controlling an image processing apparatus, the method comprising receiving a three-dimensional (3D) video (S11) signal including stereoscopic information; and
scaling (S12) the received 3D video signal, wherein the scaling includes adjusting the received 3D video signal to correspond to a supported resolution and changing the stereoscopic information.

12. The method according to claim 11, further comprising receiving a user's selection for adjusting a depth of the received 3D video signal,
wherein the scaling is performed according to the received user's selection (S24).

13. The method according to any of claims 11 to 12, further comprising generating a first ratio, which includes one of an enlargement and a reduction ratio for the received 3D video signal (S34), based on the stereoscopic information.

14. The method according to claim 13, wherein the stereoscopic information comprises information about a difference in position between left and right-eye video signals in a first area of an image included in the 3D video signal, and
wherein the generating of the first ratio is based on the information about the difference in position (S45).

15. The method according to claim 14, further comprising:
determining a second area, which has a maximum difference in position between at least one object in the left and right-eye video signals, based on the information about the difference in position; and
generating a second ratio, which includes one of an enlargement and a reduction ratio, based on the determined second area.
